# EUROPEAN PATENT SPECIFICATION

(11) **EP 0 177 640 B1**
(45) Date of publication and mention of the grant of the patent: **17.02.1993**
(21) Application number: 84115006.3
(22) Date of filing: 11.12.1984
(51) Int. Cl.: G06F 15/62

(54) **Image reduction method**
Bildverkleinerungsverfahren
Méthode de réduction d'image

(30) Priority: 30.12.1983 US 567310
(43) Date of publication of application: 16.04.1986
(73) Proprietor: International Business Machines Corporation, Armonk, N.Y. 10504 (US)
(72) Inventor: Mintzer, Frederick Cole, Shrub Oak,N Y 10588 (US); Anderson, Karen Louise, Peekskill, N Y 10566 (US)
(74) Representative: Burt, Roger James, Dr.

(56) References cited:
- US-A- 4 280 143
- IBM TECHNICAL DISCLOSURE BULLETIN, vol. 13, no. 8, January 1971, pages 2291-2293, New York, US; C.P. BOBERG et al.: "Regridding method"
- XEROX DISCLOSURE JOURNAL, vol. 5, no. 1, January/February 1980, pages 115-116, Stamford, Connecticut, US; H. LIAO: "Tabel look-up realization of digital filtering"
- PATENTS ABSTRACTS OF JAPAN, vol. 9, no. 20 (P-330) [1743], 26th January 1985; & JP - A - 59 167 772 (RICHO K.K.) 21-09-1984

## Description

The present invention relates to a method for reducing the size of a binary image in a computer.

For example, US-A-280-143 describes a method and means for scale-changing raster scanned data from a first picture element (pel) resolution to a second lower pel resolution. The operation is performed first in the image row direction and then in the image column direction. A first scale-change projector is used which functions to replace subgroups of pels in the input image rows by single pels at its output, wherein the significance of the output bits replacing the subgroups is determined in accordance with a predetermined algorithm. A second scale-change projector is thereafter used, which performs column scale-changing operations. Thus, operations are performed on a small group (2 or 3 pels) which is reduced to 1 pel. These operations are computationally very expensive.

Therefore, it is an object of the present invention to provide an improved method of this kind.

The invention accordingly is characterised by storing said image in bit sequence in said computer; dividing the rows of said stored image in groups of i rows; for each of said groups of i rows dividing said Image into transposable blocks of n x i bits; for each block of n x i bits, testing for all zero bits, and if all bits are zero omitting steps a) - e) for reduction, reconstruction and storing; for each block of n x i bits having any two bits different, transposing and reducing by table lookup, each string of n bits along a first axis to a string of m bits along a second axis, where m is 1 less than n, said transposing and reducing being carried out by a) using a predefined set of i lookup tables, each of said i tables being associated with one of the i strings of n bits constituting a block of n x i bits of the input image, wherein in each table a coded value representing a predetermined reduced string of n-1 bits corresponds to each possible particular configuration of a string of n bits, b) indexing each of the i tables using one of the i strings of n bits in a block of n x i bits of the input image to obtain the coded value corresponding to the particular configuration of that string, c) summing the i values obtained from the i tables, thereby providing a sequence of bits representing a reduced and transposed intermediate block of i x (n-1) bits; d) repeating the above steps for reducing and transposing the intermediate block of i x (n-1) bits to a block having (n-1)x(i-1) bits of the output image, using n-1 tables of coded values associated with the respective n-1 strings of i bits in the intermediate block; and e) storing said transposed blocks as a reduced image.

In a preferred embodiment of the invention i and n each equals 6.>.

Thus, according to this method operations are performed on two-dimensional blocks, which are computationally much faster and therefore less expensive.

The foregoing and other objects, features and advantages of the invention, which is defined in the attached claims, will be apparent from the more particular description of the preferred embodiment of the invention, as illustrated in the accompanying drawing.

FIG. 1 is a diagram of a portion of the method according to the present invention.

FIG. 2 is a diagram showing the reduction and transposition algorithms used with the method of the present invention.

FIG. 3 is a diagram showing the method according to the present invention.

FIG. 4 is a flow diagram showing the recomposition of a reduced image in accordance with the present invention.

In the drawing, like elements are designated with similar reference numbers.

The method according to the preferred embodiment of the present invention reduces an image by one-sixth on both the horizontal and vertical axes.

The reduction algorithm proposed uses a novel combination of techniques, including a fast reduction algorithm by table lookup for a six by six bit block and a new alorithm which exploits the fact that a binary image typically includes large areas containing only zero (white) picture elements to drastically reduce the amount of processing required, to produce code which is significantly faster than current methods. The bits making up the image are assumed to be stored packed eight to a byte. Since bit operations are computationally expensive, the image is divided into six by six bit blocks, with the data packed six bits to a byte in temporary storage. These blocks are reduced to five by five bit blocks (packed five bits to a byte) by a table lookup procedure; the reduced blocks are then recombined to complete the reduction process. The image reduction may take place in situ, or the output image may be constructed in an area of storage which begins before the start of the input image and/or does not overlap with the input image (so that no data from the input image can be overwritten with output image data before it is used).

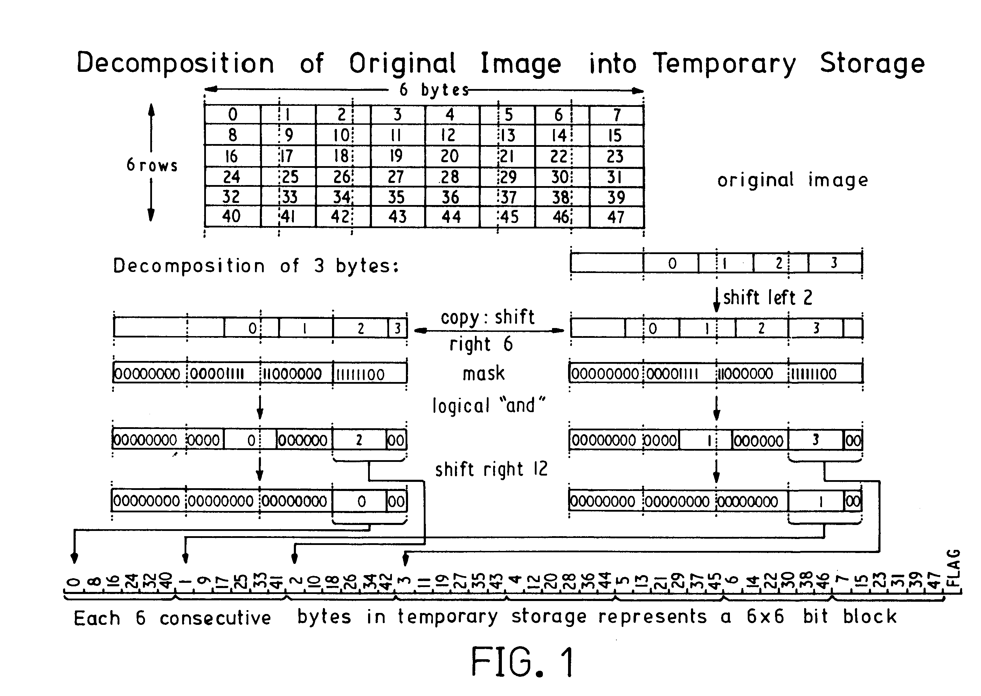

The image reduction algorithm operates on six rows of the image at a time. The data is first repacked six bits to a byte to prepare it for these operations, as follows. An area of temporary storage containing 49 bytes for every six bytes (or fraction thereof) in a single row of the image is zeroed. The input image is divided into blocks 6 bytes (48 bits) across and six rows down, each of which will be transformed into a block five bytes across and five rows down. If the width of the image is not a multiple of six bytes, the image is padded on the right with zeroes; similarly, if the number of rows of image data is not evenly divisible by six, the image is padded at the bottom with zeroes. Each 36-byte block is decomposed into the temporary buffer, yielding a 49-byte unit which contains one byte for each 6-bit row of a six by six bit block (48 bytes) plus a flag byte which is set to zero unless there is nonzero data in the original 36-byte block. The decomposition is illustrated in Figure 1. This operation makes use of 32-bit registers and processes three bytes at a time. Each three-byte unit is tested to determine whether it contains nonzero data. If it does not, no processing is needed, since the temporary buffer has been cleared; otherwise the flag byte is set to one and the indicated shifting and masking is performed to yield four 6-bit units, each shifted left by two bits for use in indexing the lookup tables.

The basic reduction operation takes a six by six bit block of the image and transforms it into a five by five bit image. The input image exists in a 49-byte unit of temporary storage, as arranged by the decomposition process described above. Each consecutive six bytes represents a six by six bit block. A set of lookup tables is used to convert each 6-bit row of image data to a five-bit column, transposing the image as well as reducing it. The operation is repeated to reduce the rows of the transposed image to five bits and retranspose to restore the original orientation of the block. The five-bit rows of the reduced image are stored left-justified in the first five bytes in the six-byte area of temporary storage from which the decomposed original image came.

The lookup tables used in the image reduction are constructed to preserve runs wherever possible. The rules for reducing a 6-bit row to five bits are as follows:
1. If the third pel can be removed without destroying a run, remove it; otherwise
2. If one run in the row is longer than all other runs, shorten that run by one bit; otherwise
3. If there are two two-bit runs, one of which is closer to the center of the row than the other, shorten the run closer to the center of the row by one bit; otherwise
4. If there are two two-bit runs, equally distant from the center of the row, shorten the white run (the two runs will be of opposite colors); otherwise
5. The only cases which remain are the alternating white/black and black/white (010101 and 101010). Remove the white pel nearest the center of the row.

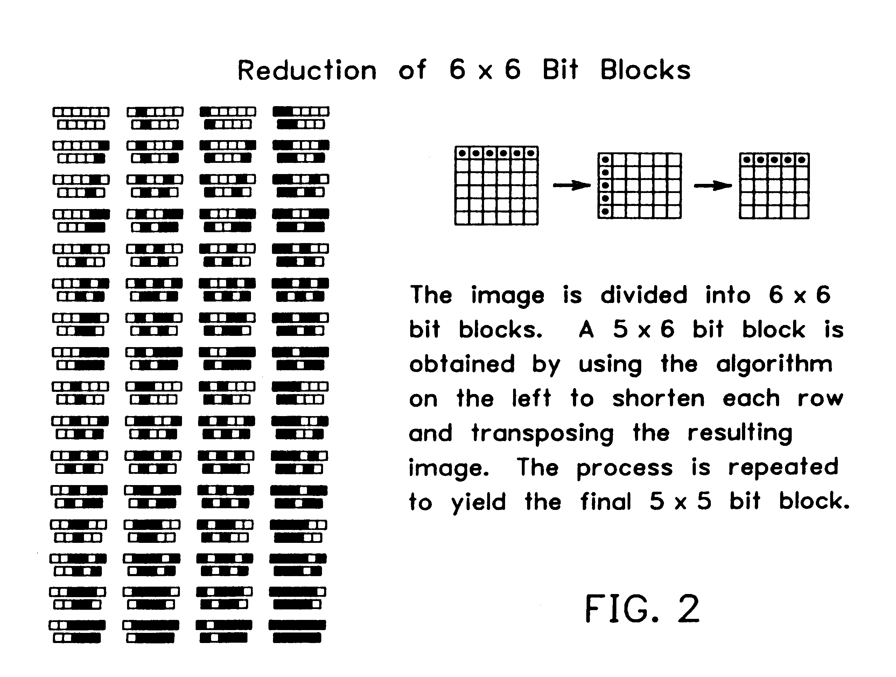

Note that if rule 3 is reached, the row contains no runs longer than two bits. The reduction of a 6-bit row is illustrated in Figure 2. The entries in the first lookup table, in hexadecimal, are as follows: 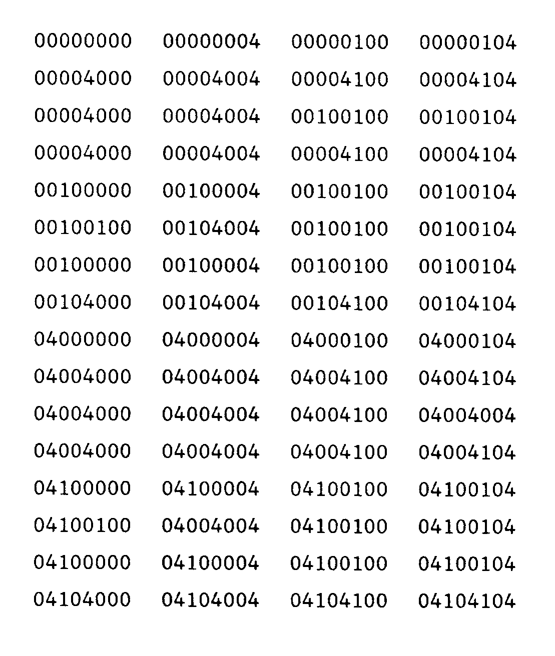
The remaining five lookup tables are obtained by shifting these values left one bit for each successive table.

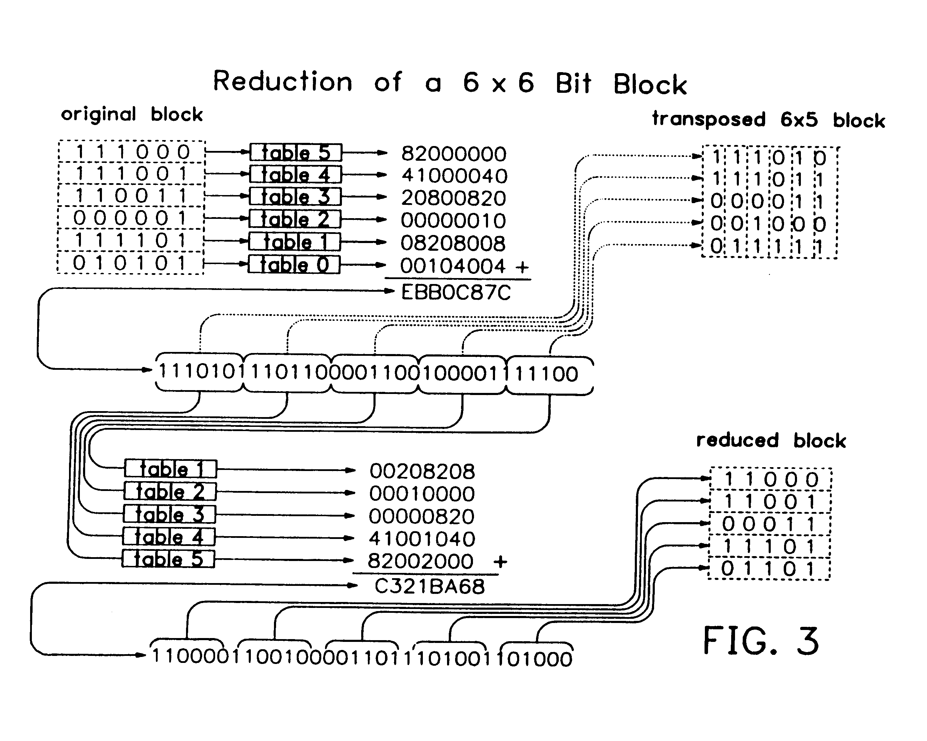

Figure 3 shows an example of the operation of the reduction algorithm. The six 6-bit rows are used to index into the lookup tables, and the resulting values are summed. This produces a block six bits wide by five bits long, in which each row of the original block has been reduced to five bits and the block has been transposed. The operation is repeated, using the same lookup tables to reduce each row of the transposed block to five bits and retranspose, producing a five by five bit block.

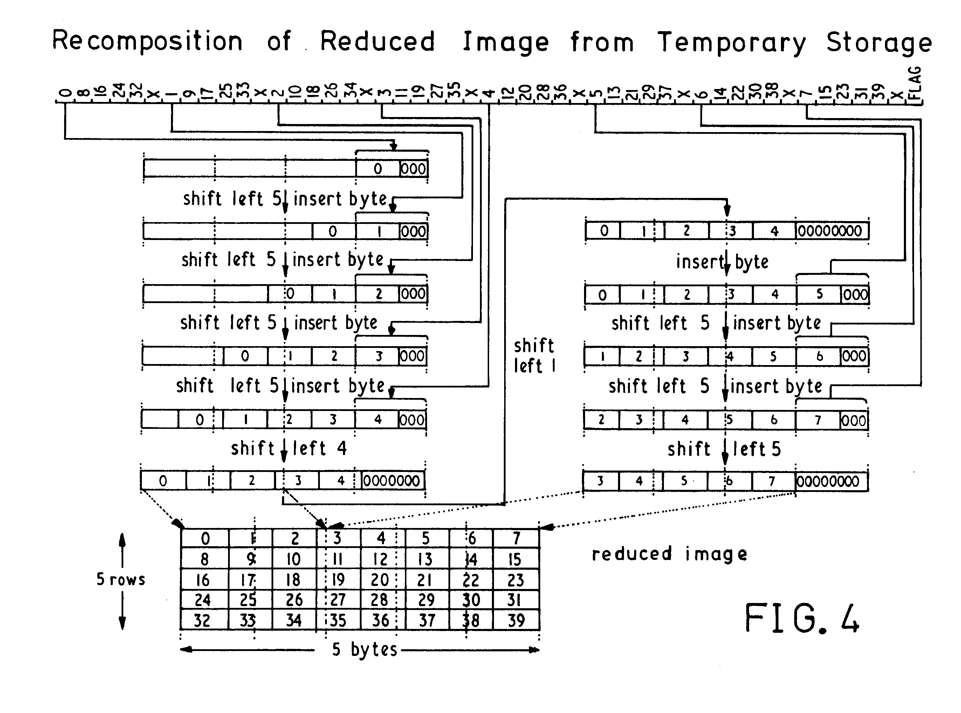

Finally, the section of the output image to be filled in is zeroed. The rows of the output image are recomposed from the five by five bit blocks stored in the temporary buffer and the output image is filled in. This operation is illustrated in Figure 4. The implementation makes use of the 32-bit registers and the insert character, shift left logical, and store operations available on the IBM System/370.

For any 49-byte unit for which the flag byte is zero (i.e. the block contains no nonzero data), the reduction, reconstitution, and storage of the output image may be omitted (since an all-zero block reduced will contain all zeroes, and the output image has already been cleared). Since for typical images large portions of the image are white, and since the compaction and storage are the most time-consuming portions of the algorithm, this results in a significant increase in speed for most images over an algorithm in which this special case is not considered.

This function performs a resolution change of 240 to 200 pels (i.e. the output image has 5/6 the number of bits in each dimension as the input image). The input image contains "irows" rows and "icols" columns ("icols" is expressed in bytes) beginning at the address pointed to by "inimage". The reduced image is placed at the address pointed to by "outimage". The number of rows and (byte) columns in the reduced image are returned in the caller's parameter buffer as "orows" and "ocols".

"inimage" and "outimage" may point to the same address, or the input and output images may be so placed that either they do not overlap or, if they do, the first byte of the input image does not precede the first byte of the output image. This prevents any part of the input image being destroyed before it is processed.

The input image is processed in units of six lines. Each six-line unit is broken up into blocks six bytes wide, and the six bytes in each line are converted to eight bytes, each containing six bits of the original data. Successive 48-byte blocks are saved in temporary storage, along with a flag indicating whether the data in the block contains any nonzero bits. The data is reduced using lookup tables and saved into the temporary storage (replacing the unreduced data), and then reassembled and placed in the output image. The main loop processes a six-line unit; the first loop within it (referred to as the "input loop") collects the data from a group of six lines and moves it to temporary storage; and the second loop within the main loop (referred to as the "output loop") reduces the data and places it into the output image. The output image is cleared before any data is moved into it. The output loop tests the flag for each 48-byte block to determine whether it contains any nonzero data; if it does not, no processing is necessary.

## Claims

1. A method for reducing the size of a binary image in a computer, characterised by
storing said image in bit sequence in said computer;
dividing the rows of said stored image in groups of i rows;
for each of said groups of i rows dividing said image into transposable blocks of n x i bits;
for each block of n x i bits, testing for all zero bits, and if all bits are zero omitting steps a) - e) for reduction, reconstruction and storing;
for each block of n x i bits having any two bits different, transposing and reducing by table lookup, each string of n bits along a first axis to a string of m bits along a second axis, where m is 1 less than n,
said transposing and reducing being carried out by
a) using a predefined set of i lookup tables, each of said i tables being associated with one of the i strings of n bits constituting a block of n x i bits of the input image, wherein each table a coded value representing a predetermined reduced string of n-1 bits corresponds to each possible particular configuration of a string of n bits,
b) indexing each of the i tables using one of the i strings of n bits in a block of n x i bits of the input image to obtain the coded value corresponding to the particular configuration of that string,
c) summing the i values obtained from the i tables, thereby providing a sequence of bits representing a reduced and transposed intermediate block of i x (n-1) bits;
d) repeating the above steps for reducing and transposing the intermediate block of i x (n-1) bits to a block having (n-1)x(i-1) bits of the output image, using n-1 tables of coded values associated with the respective n-1 strings of i bits in the intermediate block; and
e) storing said transposed blocks as a reduced image.

2. The method as claimed in claim 1, wherein n and i each equal 6.

## Patentansprüche

1. Ein Verfahren zur Verkleinerung von binären Bildern in einem Computer, das gekennzeichnet ist
durch Speichern des Bildes in Bitsequenz im Computer;
durch Teilen der Reihen des gespeicherten Bildes in Gruppen von i Reihen;
durch Teilen des Bildes in transponierbare Blöcke von n x i Bits für jede Gruppe der i Reihen;
durch Prüfen sämtlicher Nullbits für jeden Block von n x i Bits und wenn alle Bits Null unterdrücken werden die Schritte a) - e) zum Verkleinern, Wiederherstellen und Speichern durchgeführt;
durch Transponieren und Verkleinern jeder Zeichenkette von n Bits entlang einer ersten Achse zu einer Zeichenkette von m Bits entlang einer zweiten Achse mittels Tabellenlesens für jeden Block von n x i Bits, der zwei unterschiedliche Bits aufweist, wobei m 1 weniger als n beträgt,
dabei wird das Transponieren und Verkleinern ausgeführt
a) durch Verwendung eines festgelegten Satzes von i Suchtabellen, von denen jede einer der i Zeichenketten von n Bits zugeordnet ist, die einen Block von n x i Bits des Eingabebildes bilden, wobei in jeder Tabelle ein codierter Wert, der die festgelegte verkleinerte Zeichenkette von n-1 Bits darstellt, jeder möglichen Konfiguration einer Zeichenkette von n Bits entspricht,
b) durch Indexieren der i Tabellen unter Verwendung einer der i Zeichenketten von n Bits in einem Block von n x i Bits des Eingabebildes, um den codierten Wert zu erhalten, der der bestimmten Konfiguration dieser Zeichenkette entspricht,
c) durch Zusammenzählen der i Werte, die von den i Tabellen kommen, wobei eine Sequenz von Bits entsteht, die den verkleinerten und transponierten Zwischenblock von i x (n-1) Bits darstellt,
d) durch Wiederholen der oben genannten Schritte zur Verkleinerung und Transponierung des Zwischenblocks von i x (n-1) Bits zu einem Block mit (n-1)x(i-1) Bits des Ausgabebildes, wobei n-1 Tabellen der codierte Werte verwendet werden, die der entsprechenden n-1 Zeichenkette von i Bits im Zwischenblock zugeordnet sind; und
e) durch Speichern der transponierten Blöcke als verkleinertes Bild.

2. Das in Anspruch 1 beanspruchte Verfahren, bei dem n und i jeweils gleich 6 sind.

## Revendications

1. Procédé de réduction de la dimension d'une image binaire dans un ordinateur, caractérisé par
le stockage de ladite image en séquence de bits dans ledit ordinateur ;
la division des lignes horizontales ou rangées de ladite image stockée, en groupes de i rangées ;
pour chacun de ces groupes de i rangées, la division de ladite image en blocs transposables de n x i bits ;
pour chaque bloc de n x i bits, la détermination de ce que tous les bits sont ou non uniquement des zéros et, si tous les bits sont des zéros, suppression des étapes a) - e) de réduction, reconstruction et stockage ;
pour chaque bloc de n x i bits contenant deux bits quelconques différents, la transposition et la réduction,par consultation de tables, de chaque chaîne de n bits le long d'un premier axe en une chaîne de m bits le long d'un deuxième axe, la valeur de m étant de 1 de moins que n,
lesdites transposition et réduction étant effectuées par
a) utilisation d'un ensemble prédéfini de i tables de consultation, chacune de ces i tables étant associée à une des i chaînes de n bits constituant un bloc de n x i bits de l'image d'entrée, de sorte que, dans chaque table, une valeur codée représentant une chaîne réduite prédéterminée de n - 1 bits corresponde à chaque configuration particulière possible d'une chaîne de n bits,
b) indexage de chacune des i tables au moyen d'une des i chaînes de n bits d'un bloc de n x i bits de l'image d'entrée, pour obtenir la valeur codée correspondant à la configuration particulière de cette chaîne,
c) addition des i valeurs obtenues à partir des i tables, ce qui engendre une séquence de bits représentant un bloc intermédiaire réduit et transposé de i x (n-1) bits ;
d) répétition des étapes ci-dessus pour réduire et transposer le bloc intermédiaire de i x (n-1) bits en un bloc ayant (n-1) x (i-1) bits de l'image de sortie, au moyen de n-1 tables de valeurs codées associées aux n-1 chaînes respectives de i bits du bloc intermédiaire ; et
e) stockage desdits blocs transposés,comme image réduite.

2. Procédé suivant la revendication 1, dans lequel n et i sont tous deux égaux à 6.
